(19) Europäisches Patentamt
European Patent Office
Office européen des brevets

(11) EP 4 779 077 A1

(12) EUROPEAN PATENT APPLICATION
published in accordance with Art. 153(4) EPC

(43) Date of publication:
**22.07.2026 Bulletin 2026/30**

(21) Application number: **24865347.9**

(22) Date of filing: **05.09.2024**

(51) International Patent Classification (IPC):
***D21H 17/58*** *(2006.01)* ***H01M 8/10*** *(2016.01)*
***H01M 8/106*** *(2016.01)* ***H01M 8/1062*** *(2016.01)*

(52) Cooperative Patent Classification (CPC):
**D21H 17/58; H01M 8/10; H01M 8/106;**
**H01M 8/1062;** Y02E 60/10

(86) International application number:
**PCT/JP2024/031805**

(87) International publication number:
**WO 2025/057847 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.09.2023 JP 2023148029**

(71) Applicant: **Toray Industries, Inc.**
**Tokyo 103-8666 (JP)**

(72) Inventors:
- **OZAWA, Itsuki**
  **Mishima-shi, Shizuoka 411-8652 (JP)**
- **KATSUTA, Hiroo**
  **Mishima-shi, Shizuoka 411-8652 (JP)**
- **MAEKAWA, Shigetoshi**
  **Mishima-shi, Shizuoka 411-8652 (JP)**

(74) Representative: **Mewburn Ellis LLP**
**Aurora Building**
**Counterslip**
**Bristol BS1 6BX (GB)**

# (54) WET-LAID NONWOVEN FABRIC, ELECTROLYTE REINFORCING FILM, AND METHOD FOR PRODUCING WET-LAID NONWOVEN FABRIC

(57) The present invention provides a wet-laid nonwoven fabric having a small thickness, high strength, high air permeability, and high uniformity of pore diameter. The wet-laid nonwoven fabric includes drawn polyarylene sulfide fibers having an average fiber diameter of 0.3 μm or more and 3.0 μm or less, has an average pore diameter of 0.5 μm or more and 50.0 μm or less, and has a basis weight of 1.0 g/$m^2$ or more and less than 8.0 g/$m^2$.

EP 4 779 077 A1

## Description

### Technical Field

The present invention relates to a wet-laid nonwoven fabric, a reinforced electrolyte membrane, and a method of producing a wet-laid nonwoven fabric.

### Background Art

Polyarylene sulfide has high heat resistance, chemical resistance, electrical insulation, and flame retardancy, and also has excellent mechanical properties and molding processability. Thus, polyarylene sulfide is widely used as a metal substitution material and a material that can withstand extreme environments. Polyarylene sulfide fibers are also used for applications such as bag filters, papermaking canvases, electrical insulating paper, battery separators, and various diaphragms by taking advantage of these characteristics. In particular, for a reinforcing material for electrolyte membranes, which is attracting attention as a clean energy source, studies are being conducted to combine the characteristics of polyarylene sulfide, such as heat resistance and chemical resistance, with the characteristics of nonwoven fabric materials, such as ion permeability and gas separation properties.

In order to enhance the efficiency of an electrolyte membrane, a reduction in the thickness of the membrane is required, and simultaneously, mechanical strength needs to be achieved. Accordingly, a configuration of a reinforced electrolyte membrane in which an electrolyte membrane is formed on a reinforcing material for the electrolyte membrane has been proposed. This reinforcing material for an electrolyte membrane needs to be thin and have high air permeability, high mechanical strength, and high uniformity of pore diameter of the wet-laid nonwoven fabric in order not to lower the ion permeability of the resultant reinforced electrolyte membrane.

To address this problem, for example, a wet-laid nonwoven fabric for a reinforcing material for polymer electrolytes has been proposed (Patent Literature 1), in which the fabric is mainly composed of fibers of polyphenylene sulfide, which is one kind of polyarylene sulfide. The Literature states that undrawn polyphenylene sulfide fibers plasticize at a lower temperature than drawn polyphenylene sulfide fibers, and thus, act as binder fibers, resulting in a wet-laid nonwoven fabric having excellent mechanical strength.

Additionally, a wet-laid nonwoven fabric having excellent gas barrier properties and ion permeability has been proposed, which is composed of thermoplastic fibers having an average single fiber fineness of 0.1 to 10 dtex and having a specific number of crimps (Patent Literature 2). Additionally, the Literature states that the thermoplastic fibers contain polyphenylene sulfide fibers (PPS).

On the other hand, polyphenylene sulfide fibers have low water retention, and have a problem of being prone to cause web breaks during the papermaking process. In view of this, a polyphenylene sulfide wet-laid nonwoven fabric mixed with aramid fibers having higher water retention than polyphenylene sulfide fibers has been proposed (Patent Literature 3). The Literature states that by containing fibrillated aramid fibers, the specific surface area of the fibers is increased, and the number of bonded areas between fibers increases, resulting in a wet-laid nonwoven fabric having strong paper strength.

### Citation List

#### Patent Literature

Patent Literature 1: JP2003-77494A
Patent Literature 2: JP2016-89197A
Patent Literature 3: JP2020-76174A

### Summary of Invention

#### Technical Problem

With the technology disclosed in Patent Literature 1, a polyphenylene sulfide wet-laid nonwoven fabric having excellent mechanical strength can be obtained, but has a problem in that the structural fibers constituting the wet-laid nonwoven fabric are substantially thick, thus failing to enable the wet-laid nonwoven fabric to be thin. For example, with a wet-laid nonwoven fabric that is described in the Examples section, and composed of drawn PPS fibers having a fineness of 1.1 dtex (that is, the fiber diameter of the polyphenylene sulfide fibers is 10 μm) and fibers having a fineness of 2.2 dtex

(that is, the fiber diameter of the polyphenylene sulfide fibers is 14 μm), a wet-laid nonwoven fabric having a thickness of 14 μm or less cannot be obtained. Additionally, using fibers having a large fiber diameter to produce a wet-laid nonwoven fabric having a low basis weight has a problem in that the strength is extremely decreased.

Additionally, in the technology disclosed in Patent Literature 2, thick thermoplastic fibers having a fineness of 0.1 dtex or more (i.e., the fiber diameter of the polyphenylene sulfide fibers is 3.03 μm or more) are used, and additionally, the basis weight of the nonwoven fabric is large, resulting in decreasing the air permeability of the nonwoven fabric. Accordingly, using the nonwoven fabric as a reinforced electrolyte membrane results in decreasing the efficiency of power generation in some cases. On the other hand, the nonwoven fabric, if decreased in thickness, results in increasing in air permeability, but decreasing in the number of constituent fibers of the wet-laid nonwoven fabric, and decreasing in strength, in some cases.

Next, according to Patent Literature 3, a wet-laid nonwoven fabric having high wet strength is obtained by mixing fibrillated aramid fibers into a polyphenylene sulfide wet-laid nonwoven fabric. However, this method has a problem in that containing the fibrillated fibers results in yielding a wet-laid nonwoven fabric having low air permeability, and the aramid fibers having low acid resistance results in decreasing the chemical resistance of the wet-laid nonwoven fabric, and thus, decreasing the strength of the wet-laid nonwoven fabric, which is accordingly not suitable as a reinforcing material for electrolyte membranes.

An object of the present invention is to improve the problems of such conventional technologies, and to provide a wet-laid nonwoven fabric that is thin, has high tensile strength and air permeability, and has high uniformity.

Solution to Problem

The present inventors have conducted studies, and discovered the following: in order that a wet-laid nonwoven fabric containing polyarylene sulfide fibers can be made thinner and increased in air permeability and tensile strength, it is effective to decrease the basis weight of the wet-laid nonwoven fabric, and make the constituent fibers finer. On the other hand, using very thin fibers resulted in decreasing the dispersibility, for example, owing to aggregation occurring between fibers in a fiber dispersion during the production of the wet-laid nonwoven fabric. Thus, unevenness was more likely to occur particularly in a low basis-weight wet-laid nonwoven fabric produced using the dispersion, making it difficult to obtain a wet-laid nonwoven fabric having high uniformity of pore diameter.

In view of this, the present inventors have conducted studies intensively to solve the above problems, and have consequently completed the present invention through the discovery that a wet-laid nonwoven fabric having both air permeability and tensile strength, and having high uniformity of pore diameter can be obtained by setting the average fiber diameter of the polyarylene sulfide fibers within a specific range, even if the fabric has a low basis weight.

The present invention is intended to solve the above problems, and adopts the following means.

(1) A wet-laid nonwoven fabric which includes drawn polyarylene sulfide fibers having an average fiber diameter of 0.3 μm or more and 3.0 μm or less, has an average pore diameter of 0.5 μm or more and 50.0 μm or less, and has a basis weight of 1.0 $g/m^2$ or more and less than 8.0 $g/m^2$.

(2) The wet-laid nonwoven fabric according to (1), including undrawn polyarylene sulfide fibers having an average fiber diameter of 0.8 μm or more and 6.0 μm or less.

(3) The wet-laid nonwoven fabric according to (1) or (2), wherein aspect ratio (average fiber length / average fiber diameter) of the drawn polyarylene sulfide fibers is 800 or more and 2000 or less, and
aspect ratio (average fiber length / average fiber diameter) of the undrawn polyarylene sulfide fibers is 400 or more and 1800 or less.

(4) The wet-laid nonwoven fabric according to any one of (1) to (3), wherein, in a pore diameter distribution curve, pores having a diameter of 0.9 Dp or more and 1.1 Dp or less account for 50% or more of all pores, wherein Dp (nm) is a pore diameter indicating the maximum peak in a pore diameter distribution.

(5) The wet-laid nonwoven fabric according to any one of (1) to (4), having a shrinkage rate of 8.0% or less after being left to stand in an atmosphere at a temperature of 160°C for 24 hours.

(6) The wet-laid nonwoven fabric according to any one of (2) to (5), wherein the average fiber diameter of the undrawn polyarylene sulfide fibers is smaller than the average fiber diameter of the drawn polyarylene sulfide fibers.

(7) A reinforced electrolyte membrane including the wet-laid nonwoven fabric according to any one of (1) to (6).

(8) A method of producing the wet-laid nonwoven fabric according to any one of (2) to (7), including a step of dispersing the drawn polyarylene sulfide fibers and the undrawn polyarylene sulfide fibers in an aqueous medium to obtain a dispersion, wherein fiber concentration of the dispersion is 1.0 mass ppm or more and 80.0 mass ppm or less.

(9) The method of producing the wet-laid nonwoven fabric according to (8), wherein the dispersion contains a dispersant, and concentration of the dispersant in the dispersion is 0.0010 mass% or more and 8.0 mass% or less.

Advantageous Effects of Invention

According to the present invention, a wet-laid nonwoven fabric having a small thickness, high strength, high air permeability, and high uniformity of pore diameter can be obtained.

Description of Embodiments

A wet-laid nonwoven fabric of the present invention satisfies the following requirements.

The wet-laid nonwoven fabric includes drawn polyarylene sulfide fibers having an average fiber diameter of 0.3 μm or more and 3.0 μm or less, has an average pore diameter of 0.5 μm or more and 50.0 μm or less, and has a basis weight of 1.0 $g/m^2$ or more and less than 8.0 $g/m^2$.

Hereinafter, the present invention will be described in detail, but the present invention is not limited to the scope described below as long as the present invention does not exceed the gist thereof.

<Polyarylene sulfide fiber>

The polyarylene sulfide used for the polyarylene sulfide fibers is a homopolymer or copolymer having a repeating unit of -(Ar-S)-. Examples of Ar include structural units of the following Formulas (1) to (12) and the like.

[Chem. 1]

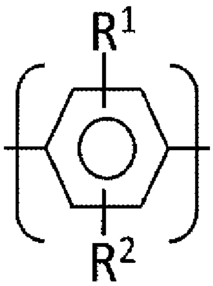

(1)

[Chem. 2]

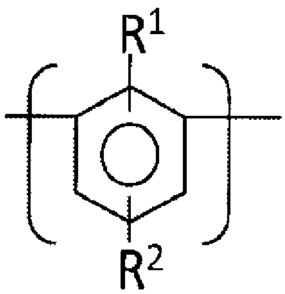

(2)

[Chem. 3]

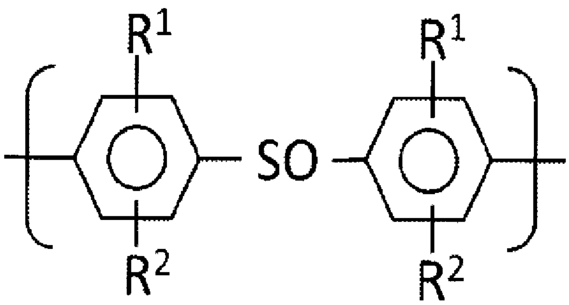

(3)

[Chem. 4]

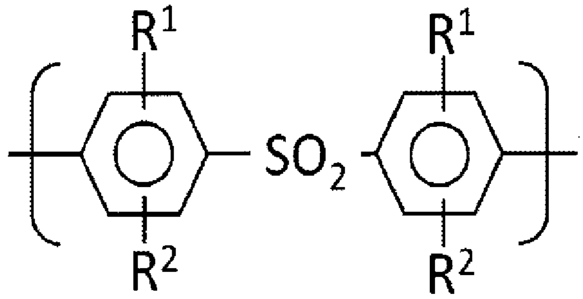

(4)

[Chem. 5]

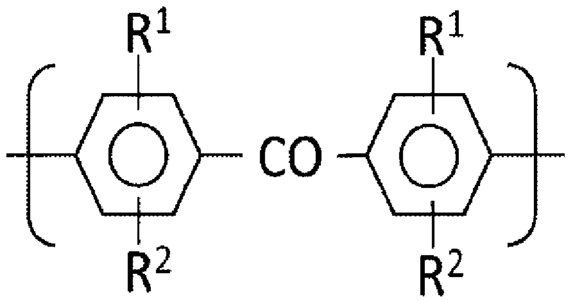

(5)

[Chem. 6]

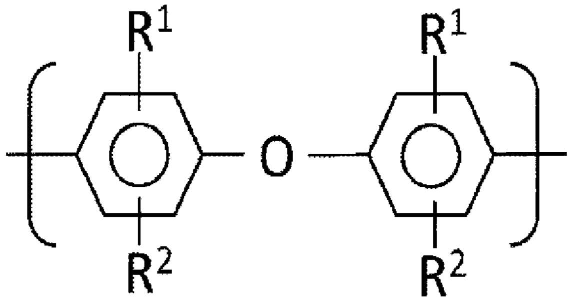

(6)

[Chem. 7]

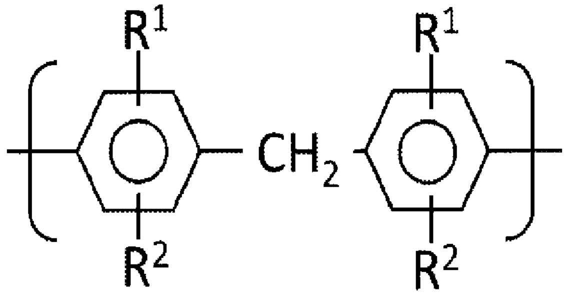

(7)

[Chem. 8]

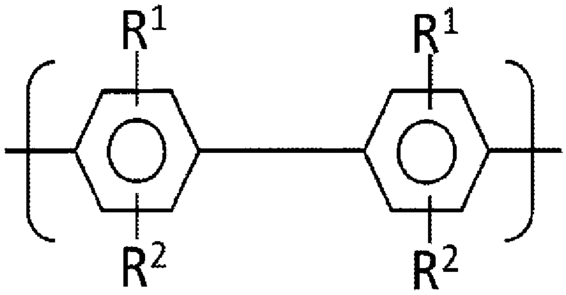

(8)

[Chem. 9]

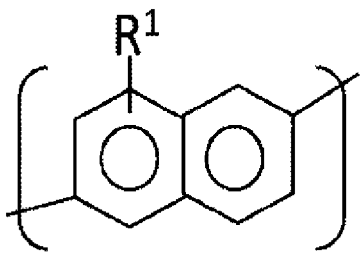

(9)

[Chem. 10]

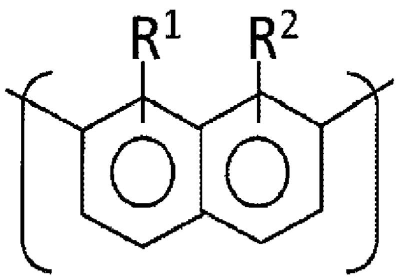

(10)

[Chem. 11]

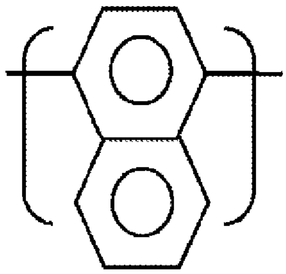

(11)

[Chem. 12]

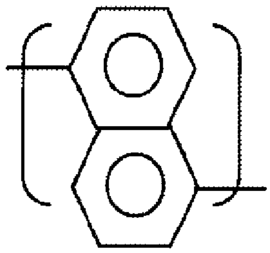

(12)

(In Formulas (1) to (10), $R^1$ and $R^2$ are each a substituent selected from a hydrogen atom, alkyl group, alkoxy group, and halogen group, and $R^1$ and $R^2$ may be the same or different.)

Typical examples of the polyarylene sulfide include polyphenylene sulfide (PPS), polyphenylene sulfide sulfone, and polyphenylene sulfide ketone. As a repeating unit of the polyarylene sulfide, a p-arylene sulfide unit in which Ar is the above Formula (1) is preferable.

Additionally, a resin containing a p-phenylene unit of the following Structural Formula (13) as a main structural unit of the polymer is used in an amount of preferably 60 mol% or more, more preferably 70 mol% or more, and still more preferably 80 mol% or more to provide properties excellent in heat resistance. Additionally, a fiber and a wet-laid nonwoven fabric that are obtained by processing the polymer have excellent strength.

[Chem. 13]

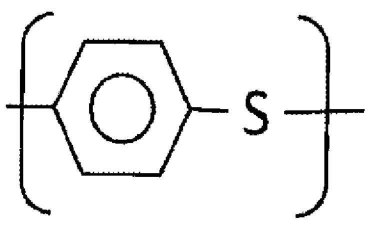

(13)

Additionally, a copolymerization unit may be included to the extent that the unit does not impair the effects of the

present invention, but the copolymerization unit is preferably 20 mol% or less relative to the polyarylene sulfide polymer.

The polyarylene sulfide fiber may contain any kind of additive to the extent that such an additive does not impair the effects of the present invention. Examples of the additive include: inorganic substances such as titanium oxide, silica, barium oxide, and calcium carbonate; colorants such as carbon black, dyes, and pigments; flame retardants; fluorescent whitening agents; antioxidants; and ultraviolet absorbers.

The polyarylene sulfide fiber may be not only a single-component fiber but also a composite fiber in which two or more types of resins are composited. In a case where the polyarylene sulfide fiber is a composite fiber, the composite form thereof is not particularly limited as long as the composite form does not impair the effects of the present invention. The form can be suitably selected from a core-clad type, sea-island type, side-by-side type, eccentric core-clad type, blend type, and the like. The polyarylene sulfide is contained in the polyarylene sulfide fiber preferably in an amount of 70 mass% or more relative to the total mass of the polymer in the fiber.

The cross-sectional shape of the polyarylene sulfide fiber is not limited at all, and can be not only a round cross-section but also an arbitrary modified cross-sectional shape, examples of which include: a multi-lobed cross-section such as a Y-shaped cross-section or a triangular cross-section; an oblate cross-section; an S-shaped cross-section; a cross-shaped cross-section; and a hollow cross-section.

<Drawn polyarylene sulfide fibers>

A wet-laid nonwoven fabric of the present invention includes drawn polyarylene sulfide fibers having an average fiber diameter of 0.3 μm or more and 3.0 μm or less. Here, the "drawn polyarylene sulfide fiber" refers to a fiber in which the polyarylene sulfide molecular chains have an orientation parameter of 3.0 or more. The orientation parameter is a value indicating the orientation of the molecular chains of polyarylene sulfide. A larger orientation parameter indicates higher orientation of the molecular chains. Here, the orientation parameter is measured using a laser Raman spectrometer. The orientation parameter of the drawn polyarylene sulfide fibers is preferably 3.0 or more, more preferably 5.0 or more, and still more preferably 7.0 or more. By setting the orientation parameter within the above range, the fibers have high heat resistance and excellent tensile strength. The orientation parameter of the drawn polyarylene sulfide fibers is preferably 40 or less, more preferably 30 or less, and still more preferably 25 or less. By setting the orientation parameter within the above range, the fibers have a large fiber elongation.

Here, the orientation parameter in the present invention refers to a parameter obtained by the method described in Examples. Additionally, a method of setting the orientation parameter of the drawn polyarylene sulfide fibers within the above range can be achieved by setting a draw ratio to 2.5 times or more in a drawing step of the fiber, but any other method may be used to the extent that the method does not impair the object of the present invention.

The average fiber diameter of the drawn polyarylene sulfide fibers is 0.3 μm or more and 3.0 μm or less. Allowing the drawn polyarylene sulfide fibers to have an average fiber diameter larger than 3.0 μm results in decreasing the number of constituent fibers at the same basis weight, thus decreasing the tensile strength of the wet-laid nonwoven fabric, and additionally, increasing the thickness of the wet-laid nonwoven fabric. Additionally, allowing the average fiber diameter to be large results in increasing variations in pore diameter, and decreasing the uniformity of pore diameter. The average fiber diameter of the drawn polyarylene sulfide fibers is preferably 2.8 μm or less and more preferably 2.7 μm or less. On the other hand, allowing the average fiber diameter to be less than 0.3 μm results in increasing the number of constituent fibers at the same basis weight, and forming a structure in which fibers are spread out. Thus, the air permeability of the resultant wet-laid nonwoven fabric becomes low. Additionally, the aspect ratio is also increased, thus the dispersibility is also decreased, and the uniformity of pore diameter of the wet-laid nonwoven fabric is decreased. The average fiber diameter of the drawn polyarylene sulfide fibers is preferably 0.5 μm or more and more preferably 1.0 μm. As used herein, the average fiber diameter (μm) of the fibers can be determined by the method described in Examples.

A method of setting the average fiber diameter of the drawn polyarylene sulfide fibers within the above range can be achieved by a method of adjusting a discharge amount of spinning and a draw ratio, but any other method may be used to the extent that the method does not impair the object of the present invention.

The aspect ratio (average fiber length / average fiber diameter) of the drawn polyarylene sulfide fibers is preferably 800 or more and 2000 or less. By setting the aspect ratio of the drawn polyarylene sulfide fibers to 2000 or less, drawn polyarylene sulfide fibers having excellent dispersibility can be obtained, and a wet-laid nonwoven fabric having higher uniformity of pore diameter can be obtained. The aspect ratio of the drawn polyarylene sulfide fibers is more preferably 1800 or less, and still more preferably 1500 or less. On the other hand, by setting the aspect ratio of the drawn polyarylene sulfide fibers to 800 or more, the fibers are less prone to fall off in the processing step, and additionally, the tensile strength of the wet-laid nonwoven fabric is further enhanced by entanglement between fibers. The aspect ratio of the drawn polyarylene sulfide fibers is more preferably 900 or more, and still more preferably 1000 or more.

Here, the average fiber length can be measured in accordance with "8.4.1. Average fiber length, Direct method (Method C)" of JIS L1015:2010 "Test methods for man-made staple fibers". Additionally, the aspect ratio is a value obtained by dividing the average fiber diameter of the fibers by the average fiber length.

<Undrawn polyarylene sulfide fibers>

A wet-laid nonwoven fabric of the present invention preferably contains undrawn polyarylene sulfide fibers of 0.8 μm or more and 6.0 μm or less. As used herein, the "undrawn polyarylene sulfide fibers" refer to fibers in which molecular chains are not oriented, and which have an orientation parameter of less than 3.0. The orientation parameter of the undrawn polyarylene sulfide fibers is preferably less than 3.0, more preferably 2.5 or less, and still more preferably 2.0 or less. By setting the orientation parameter within the above range, the fibers have many amorphous parts, and have high bonding ability exhibited when the fibers are used as binder fibers.

A method of setting the orientation parameter of the undrawn polyarylene sulfide fibers within the above range can be achieved by a method of setting a spinning speed to 1500 m/min or less, but any other method may be used to the extent that the method does not impair the object of the present invention.

The average fiber diameter of the undrawn polyarylene sulfide fibers is 0.8 μm or more and 6.0 μm or less. Allowing the undrawn polyarylene sulfide fibers to have an average fiber diameter larger than 6.0 μm results in decreasing the number of constituent fibers at the same basis weight, decreasing the bonded areas, thus decreasing the tensile strength of the wet-laid nonwoven fabric, and additionally, increasing the thickness of the wet-laid nonwoven fabric. Additionally, allowing the average fiber diameter to be large results in increasing variations in pore diameter, and decreasing the uniformity of pore diameter. The average fiber diameter of the undrawn polyarylene sulfide fibers is preferably 4.0 μm or less and more preferably 2.5 μm or less. On the other hand, allowing the average fiber diameter of the undrawn polyarylene sulfide fibers to be less than 0.8 μm results in increasing the number of constituent fibers at the same basis weight, and forming a structure in which fibers are spread out. Thus, the air permeability of the resultant wet-laid nonwoven fabric becomes low. Additionally, the aspect ratio is also increased, thus the dispersibility is also decreased, and the uniformity of pore diameter of the wet-laid nonwoven fabric is decreased. The average fiber diameter of the undrawn polyarylene sulfide fibers is preferably 0.9 μm or more and more preferably 1.0 μm or more.

A method of setting the average fiber diameter of the undrawn polyarylene sulfide fibers within the above range can be achieved by a method of adjusting a discharge amount of spinning and a draw ratio, but any other method may be used to the extent that the method does not impair the object of the present invention.

The aspect ratio (average fiber length / average fiber diameter) of the undrawn polyarylene sulfide fibers is preferably 400 or more and 1800 or less. By setting the aspect ratio of the undrawn polyarylene sulfide fibers to more preferably 1600 or less, still more preferably 1400 or less, and most preferably 1300 or less, undrawn polyarylene sulfide fibers having excellent dispersibility can be obtained, and a wet-laid nonwoven fabric having binder bonded areas uniformized therein, and having high tensile strength can be obtained. Additionally, by setting the aspect ratio to preferably 500 or more and still more preferably 700 or more, the fibers are less prone to fall off in the processing step, and additionally, the fibers are more easily entangled with each other, resulting in a wet-laid nonwoven fabric having excellent tensile strength.

<Wet-laid nonwoven fabric>

A wet-laid nonwoven fabric of the present invention preferably includes drawn polyarylene sulfide fibers and undrawn polyarylene sulfide fibers. The drawn polyarylene sulfide fibers and the undrawn polyarylene sulfide fibers function as a structural fiber and a binder fiber respectively. The undrawn polyarylene sulfide fibers have a mostly amorphous structure, melt under heat, and exhibit a role as a binder. The drawn polyarylene sulfide fibers have high single-fiber strength and excellent dimensional stability by being drawn in the fiber production process. In the present invention, by using the drawn polyarylene sulfide fibers and the undrawn polyarylene sulfide fibers in combination, a wet-laid nonwoven fabric having excellent chemical resistance and heat resistance can be provided. Additionally, by allowing the nonwoven fabric to be of a wet-laid type, a nonwoven fabric having a low basis weight and high uniformity of pore diameter can be obtained.

A wet-laid nonwoven fabric of the present invention preferably contains the drawn polyarylene sulfide fibers at 20 mass% or more and 80 mass% or less relative to the total mass of the wet-laid nonwoven fabric. More preferably, the content is 30 mass% or more and 70 mass% or less. By allowing the drawn polyarylene sulfide fibers, which are the structural fibers of the wet-laid nonwoven fabric, to be 20 mass% or more, a wet-laid nonwoven fabric having higher tensile strength is obtained. On the other hand, by allowing the drawn polyarylene sulfide fibers to account for 80 mass% or less, the ratio of the binder fibers can be increased, and the bonded areas between the structural fibers increase, resulting in a wet-laid nonwoven fabric having higher tensile strength.

Additionally, the undrawn polyarylene sulfide fibers are preferably contained at 20 mass% or more and 80 mass% or less relative to the total mass of the wet-laid nonwoven fabric. More preferably, the content is 30 mass% or more and 70 mass% or less. Allowing the undrawn polyarylene sulfide fibers, which are the binder fibers of the wet-laid nonwoven fabric, to account for 20 mass% or more increases the bonded areas, resulting in a wet-laid nonwoven fabric having higher tensile strength. On the other hand, by allowing the undrawn polyarylene sulfide fibers to account for 80 mass% or less, the

ratio of the structural fiber component can be increased, resulting in a wet-laid nonwoven fabric having higher tensile strength.

Additionally, other fibers may be mixed within a range that does not impair the effects of the present invention, but the total amount of the drawn polyarylene sulfide fibers and the undrawn polyarylene sulfide fibers is preferably 80 mass% or more relative to the total mass of the wet-laid nonwoven fabric.

The mixing ratio by mass of the drawn polyarylene sulfide fibers to the undrawn polyarylene sulfide fibers is preferably (drawn polyarylene sulfide fibers):(undrawn polyarylene sulfide fibers) = 10:90 to 90:10 and more preferably (drawn polyarylene sulfide fibers):(undrawn polyarylene sulfide fibers) = 20:80 to 80:20. By setting the drawn polyarylene sulfide fibers and the undrawn polyarylene sulfide fibers to the above ratio, the number of bonded areas for the structural fibers becomes suitable, and a wet-laid nonwoven fabric having higher tensile strength is obtained.

The average fiber diameter of the undrawn polyarylene sulfide fibers constituting a wet-laid nonwoven fabric of the present invention is preferably smaller than the average fiber diameter of the drawn polyarylene sulfide fibers. The structural fibers (i.e., drawn polyarylene sulfide fibers) are bonded to each other via the binder fibers (i.e., undrawn polyarylene sulfide fibers), whereby the wet-laid nonwoven fabric of the present invention develops high stress when tensioned. By making the binder fibers thinner than the structural fibers, the bonded areas have an interspersed and uniformized structure, allowing the stress to be dispersed during application of tension to the wet-laid nonwoven fabric, making the fabric less prone to plastic deformation, and increasing the tensile strength of the fabric. The ratio of the average fiber diameter of the undrawn polyarylene sulfide fibers to the average fiber diameter of the drawn polyarylene sulfide fibers (average fiber diameter of undrawn polyarylene sulfide fibers / average fiber diameter of drawn polyarylene sulfide fibers) is preferably 0.05 or more and 0.90 or less and more preferably 0.10 or more and 0.80 or less. By setting the ratio within the above range, the bonded areas have an interspersed and uniformized structure, allowing the stress to be dispersed during application of tension to the wet-laid nonwoven fabric, making the fabric less prone to plastic deformation, and increasing the tensile strength of the fabric.

A wet-laid nonwoven fabric of the present invention has through-pores. Here, the through-pores are formed by gaps between fibers. It is important that the average pore diameter is 0.5 μm or more and 50.0 μm or less. A conventional wet-laid nonwoven fabric has a problem in that by simply attempting to decrease the diameter of a constituent fiber to obtain a fabric having a small basis weight, a wet-laid nonwoven fabric having high uniformity of pore diameter cannot be obtained, and also the tensile strength is decreased. In view of this, the present inventors have found that such a problem can be solved by suitably adjusting the average pore diameter. A fabric having an average pore diameter of less than 0.5 μm becomes film-like, less easily maintains porosity that is a characteristic of a nonwoven fabric, and is decreased in air permeability. The average pore diameter is preferably 1.0 μm or more and more preferably 3.0 μm or more. On the other hand, allowing the average pore diameter to be too large and exceed 50.0 μm tends to cause the formation of the wet-laid nonwoven fabric to deteriorate, impair the uniformity of the pore diameter, and decrease the tensile strength. The average pore diameter is preferably 30.0 μm or less and more preferably 20.0 μm or less.

The average pore diameter described here refers to a value calculated by a bubble point method. For the bubble point method, for example, an automated pore measurement system Perm-Porometer (manufactured by PMI) for porous materials can be used. In a measurement by this Perm-Porometer, a wet-laid nonwoven fabric sheet is immersed in a liquid having a known surface tension value, and gas is supplied from above the sheet while being increased in pressure. The average pore diameter is measured from the relationship between this pressure and the liquid surface tension on the surface of the wet-laid nonwoven fabric sheet.

A method of setting the average pore diameter of the polyarylene sulfide wet-laid nonwoven fabric within the above range can be achieved by adjusting the basis weight and the average fiber diameter of the constituent fibers.

The basis weight of a wet-laid nonwoven fabric of the present invention is 1.0 $g/m^2$ or more and less than 8.0 $g/m^2$. With the basis weight of 8.0 $g/m^2$ or more, the wet-laid nonwoven fabric becomes thick, and additionally, the number of constituent fibers is too large, thus causing the pore diameter to be extremely small. Accordingly, the air permeability tends to decrease, and the ion conduction characteristics of the reinforced electrolyte membrane decreases in some cases. The basis weight is preferably less than 6.0 $g/m^2$, more preferably less than 5.0 $g/m^2$, and still more preferably less than 3.0 $g/m^2$. On the other hand, the basis weight of less than 1.0 $g/m^2$ causes the number of constituent fibers to be too small, thus decreasing the tensile strength. Additionally, the pore diameter distribution varies, and the uniformity of pore diameter of the nonwoven fabric decreases. The basis weight is preferably 1.5 $g/m^2$ or more and more preferably 2.0 $g/m^2$ or more.

A method of setting the basis weight of the wet-laid nonwoven fabric within the above range can be achieved by adjusting the amount of fiber charged into a fiber dispersion for papermaking.

The thickness of the wet-laid nonwoven fabric of the present invention is preferably 15.0 μm or less. In some cases, setting the thickness to preferably 12.0 μm or less, more preferably 10.0 μm or less, and still more preferably 8.0 μm or less enhances the ion permeability of a reinforced electrolyte membrane containing the present wet-laid nonwoven fabric, and thus, is preferable. Additionally, when the wet-laid nonwoven fabric as a reinforcing material for electrolyte membranes is mounted on a device, the volume occupied by the fabric becomes small, so that reduction in the size and weight of the device can be achieved.

A method of setting the thickness of the wet-laid nonwoven fabric within the above range can be achieved by adjusting the basis weight, the average fiber diameter of the constituent fibers, and calendering conditions.

For a wet-laid nonwoven fabric of the present invention, it is preferable that, in a pore diameter distribution curve, pores of 0.9 Dp or more and 1.1 Dp or less account for 50% or more of all pores, wherein Dp (nm) is a pore diameter indicating the maximum peak in the pore diameter distribution. Here, the pore diameter distribution curve is obtained from the air flow rate change with respect to the pressure (in the range of from 0 kPa to 3000 kPa) in a dry state and a wet state. The pores of 0.9 Dp or more and 1.1 Dp or less more preferably account for 55% or more or still more preferably 60% or more of all pores. A higher ratio of pores of 0.9 Dp or more and 1.1 Dp or less means that pores having a uniform diameter exist without unevenness, and the unevenness in tensile strength and air permeability of the wet-laid nonwoven fabric is decreased. The higher this value is, the more desirable the value is.

Setting the ratio of pores of 0.9 Dp or more and 1.1 Dp or less within the above range can be achieved by adjusting the aspect ratio of the fibers, the concentration of the fiber dispersion for papermaking, the dispersant concentration, and the thickener concentration.

The pore diameter distribution curve of a wet-laid nonwoven fabric of the present invention can be measured according to the bubble point method (ASTM F316-86), using the Perm-Porometer.

The shrinkage rate of a wet-laid nonwoven fabric of the present invention is preferably 8.0% or less when the fabric is held at a temperature of 160°C for 24 hours, and cooled to room temperature. The shrinkage rate is more preferably 7.0% or less and still more preferably 6.0% or less. This indicates that the lower the value of the shrinkage rate is, the higher the dimensional stability against heat is. When the fabric is used as a reinforcing material for electrolyte membranes that are operated at high temperature for a long time, the membrane is less prone to deterioration, tearing, and the like due to shrinkage. Here, allowing the shrinkage rate to become negative causes expansion, also causes the membrane to undergo deterioration, tearing, and the like, and thus, is not preferable. Hence, the shrinkage rate is preferably 0% or more.

To set the shrinkage rate within the above range, it is effective to perform thermal crystallization on a nonwoven fabric in wet-laid form. A method of performing thermal crystallization can be achieved by a method described below, but any other method may be used to the extent that the method does not impair the object of the present invention.

A wet-laid nonwoven fabric of the present invention preferably has a tensile strength of 0.50 N/15 mm or more. By setting the tensile strength to more preferably 0.55 N/15 mm or more, still more preferably 0.60 N/15 mm or more, and most preferably 0.80 N/15 mm or more, the fabric becomes less prone to breakage during the production process. Additionally, such a tensile strength makes the wet-laid nonwoven fabric less prone to tearing, even when subjected to tensile stress during post-processing or during use. The tensile strength can be enhanced by allowing the drawn polyarylene sulfide fibers having high fiber strength to be firmly bonded by the fused parts of the undrawn polyarylene sulfide fibers. That is, containing the drawn polyarylene sulfide fibers and the fused parts of the undrawn polyarylene sulfide fibers makes the fibers less prone to slip out. Influence such as of the drawn polyarylene sulfide fibers bearing stress results in yielding a wet-laid nonwoven fabric having high tensile strength. In this regard, the tensile strength of the wet-laid nonwoven fabric in the present invention refers to a value measured by the method described in Examples.

The air permeability of a wet-laid nonwoven fabric of the present invention is preferably 3.0 $cm^3/(cm^2 \cdot s)$ or more. The air permeability is more preferably 10.0 $cm^3/(cm^2 \cdot s)$ or more and particularly preferably 15.0 $cm^3/(cm^2 \cdot s)$ or more. The air permeability is necessary to ensure the characteristics of the nonwoven fabric. When the fabric is used as a reinforcing material for electrolyte membranes, a high air permeability is less likely to cause ion conduction to be inhibited, and tends to enhance the ion conductivity. On the other hand, the air permeability of the wet-laid nonwoven fabric, if too high, causes the dimensional stability to be decreased, and thus, is preferably 300 $cm^3/(cm^2 \cdot s)$ or less.

<Reinforced electrolyte membrane>

A wet-laid nonwoven fabric of the present invention can be suitably used for a reinforcing material for electrolyte membranes. In this case, the wet-laid nonwoven fabric may be used as it is, or may be subjected to a hydrophilization treatment to the extent that the treatment does not impair the effects of the present invention. Subjecting the wet-laid nonwoven fabric to the hydrophilization treatment results in enhancing the permeability of the electrolyte membrane. The wet-laid nonwoven fabric has excellent tensile strength and air permeability even if the fabric is thin, and has a low basis weight. Thus, the fabric serves as a reinforcing material for electrolyte membranes that has excellent efficiency of ion permeation, and is less prone to tearing during mounting and during use.

A wet-laid nonwoven fabric of the present invention and an electrolyte membrane can be integrated into a composite to be used as a reinforced electrolyte membrane of the present invention. The reinforced electrolyte membrane can be suitably used for fuel cell applications. Examples of the electrolyte membrane include fluorine-based electrolytes and hydrocarbon-based electrolytes. Examples of the fluorine-based electrolytes include perfluorosulfonic acid-based polymers, polytrifluorostyrenesulfonic acid-based polymers, and perfluorocarbonphosphonic acid-based polymers. In particular, a cation exchange membrane composed of perfluorosulfonic acid containing a sulfonic acid group, typified by

"Nafion" (registered trademark, DuPont de Nemours, Inc.), has excellent basic characteristics, and thus, is preferably used.

<Method of producing wet-laid nonwoven fabric>

Hereinafter, a method of producing a wet-laid nonwoven fabric of the present invention is described.

[Method of producing drawn polyarylene sulfide fibers]

Various types of polyarylene sulfide fibers can be used. Among others, a preferable fiber is obtained by removing an easily soluble sea component polymer from a sea-island composite fiber that has polyarylene sulfide arranged in the island component thereof, and has a sea-island composite cross-section.

In this production method, the polyarylene sulfide and the easily soluble polymer are first melted separately, then allowed to pass through a polymer pipe, and measured using a known metering device such as a gear pump. Then, each polymer is allowed to pass through a filter for removing foreign matter from the polymer, and then allowed to flow to a spinneret. Each polymer that has flowed to the spinneret is regulated in shape into an arbitrary composite form in the spinneret, merged, and discharged in the form of a sea-island composite fiber through the spinneret hole.

The cross-sectional area of the island component in the sea-island composite fiber may be based on adjusting the amount of discharge of the polymer. For example, by making the polyarylene sulfide, which is the island component, into a round shape having a diameter of 2.0 μm, a round cross-section fiber having an average fiber diameter of 2.0 μm can be produced.

The undrawn fibers discharged are taken up by a roller (godet roller) rotating at a constant rate. The take-up rate is preferably 300 m/minute or more for the purpose of linear uniformity and productivity enhancement, and is preferably 1500 m/minute or less in order not to advance the orientation of molecular chains.

The undrawn fibers thus obtained are subjected to a drawing process. Drawing is performed by running the fibers on a heated first roller or a heating device provided between the first roller and a second roller. Drawing conditions are determined in accordance with the mechanical properties of the resultant undrawn fibers, and the draw ratio is determined in accordance with the ratio of the peripheral speed between the first roller and the second roller.

The temperature of the heated first roller or heating device in the drawing process is preferably 80°C or more and 130°C or less. By setting the temperature to 80°C or more, the drawing point is fixed, enabling stable drawing to be achieved. By setting the temperature to 130°C or less, yarn breakage can be inhibited, and the processability is enhanced. Additionally, the temperature of the second roller is preferably set to the temperature of the heated first roller or heating device + 20°C or less from the viewpoint of fixing the drawing point.

Furthermore, after passing through the second roller, the drawn fibers may be heated by a heated third roller or a heating device provided between the second roller and the third roller, to undergo heat setting. In the case of heat setting, the heat setting temperature is preferably 150 to 240°C. By setting the heat setting temperature to 150°C or more, the shrinkage rate can be decreased through thermal crystallization. This makes it possible to inhibit the width of a nonwoven fabric product from becoming ununiform in the production process of a wet-laid nonwoven fabric, and to obtain a wet-laid nonwoven fabric having excellent dimensional stability.

Next, the resultant fibers are cut into a length of 0.3 mm to 10 mm, using a cutter, whereby cut fibers can be obtained.

[Method of producing undrawn polyarylene sulfide fiber]

Cut fibers of undrawn fibers can be obtained in the same manner as in the method of producing the drawn polyarylene sulfide fibers except that neither drawing nor heat setting is performed.

[Method of producing wet-laid nonwoven fabric]

From the two kinds of cut fibers obtained using the above method, the sea component is eluted with sodium hydroxide, and the resultant fibers of each kind are dispersed in an aqueous medium. Here, the aqueous medium refers to a liquid the main component of which is water. These dispersions are mixed at a desired ratio to yield a dispersion for papermaking. The fiber concentration of the dispersion is preferably 1.0 mass ppm or more and 80.0 mass ppm or less. By setting the fiber concentration to 1.0 mass ppm or more and more preferably 1.5 mass ppm or more, the production efficiency can be enhanced, and the load on the dehydration process can be decreased. On the other hand, setting the fiber concentration to 80.0 mass ppm or less, more preferably 60.0 mass ppm or less, and still more preferably 10.0 mass ppm or less results in enhancing the state of dispersion, enabling a uniform wet-laid nonwoven fabric to be obtained, and increasing the tensile strength of the wet-laid nonwoven fabric.

The dispersion contains a dispersant, and the concentration of the dispersant with respect to the dispersion is preferably 0.0010 mass% or more and 8.0 mass% or less. By setting the dispersant concentration to 0.0010 mass% or more, more preferably 0.0075 mass% or more, and still more preferably 0.010 mass% or more, the fibers are dispersed uniformly in the dispersion, the uniformity of pore diameter of the resultant wet-laid nonwoven fabric is enhanced, and a wet-laid nonwoven fabric having higher tensile strength is obtained. Additionally, by setting the dispersant concentration to 8.0 mass% or less, more preferably 6.0 mass% or less, still more preferably 3.0 mass% or less, and still more preferably 0.80 mass% or less, the fibers are dispersed uniformly in the dispersion, the uniformity of pore diameter of the resultant wet-laid nonwoven fabric is further enhanced, and a wet-laid nonwoven fabric having higher tensile strength is obtained.

As the dispersant, a surfactant or the like can be used. Examples of the surfactant include cationic, anionic, and nonionic surfactants.

A water-soluble polymer or the like as a thickener, or an antifoaming agent for inhibiting the generation of bubbles may be added to the fiber dispersion for papermaking.

The dispersion for papermaking, prepared as described above, is subjected to papermaking, using a paper machine such as a cylinder paper machine, Fourdrinier paper machine, or inclined wire paper machine, or a handmade paper machine. The resultant paper is dried using a Yankee dryer, rotary dryer, or the like to yield a dry web. Then, the dry web is subjected to a heating and pressurization treatment to yield a wet-laid nonwoven fabric. In the present invention, performing heating and pressurization simultaneously is referred to as a heating and pressurization treatment, and is distinguished from a treatment in which only heating such as for drying is performed without pressurization. A dry web refers to a wet-laid nonwoven fabric that has not been subjected to this heating and pressurization treatment.

In a preferable production method for a wet-laid nonwoven fabric of the present invention, the undrawn polyarylene sulfide fibers are preferably produced by a heating and pressurization treatment or the like in order to enhance the bondability between fibers. In this case, it is preferable to inhibit crystallization as much as possible during the dry web production process. For that purpose, the drying temperature in the papermaking process is preferably 80 to 150°C and more preferably 90 to 140°C. It is also preferable to inhibit crystallization by shortening the passing time in the drying process. If the drying is insufficient, the paper strength of the dry web is decreased, and additionally, the dry web undergoes rapid thermal shrinkage during the subsequent heating and pressurization treatment, resulting in becoming prone to web break. Conversely, if the drying is excessive, crystallization of the dry web proceeds, and the undrawn polyarylene sulfide fibers are less likely to be plastically deformed during the subsequent heating and pressurization treatment. As a result, the mechanical properties of the resultant wet-laid nonwoven fabric are decreased.

In the production of a wet-laid nonwoven fabric of the present invention, a dry web in which two types of cut fibers are mixed is subjected to a heating and pressurization treatment. By performing the heating and pressurization treatment, the undrawn polyarylene sulfide fibers can be melted and softened, as described above, to form fused parts of polyarylene sulfide. Any means may be used as the heating and pressurization means. For example, a hot press with a flat plate or the like, a hot calender, or the like can be adopted. Among others, a hot calender capable of continuous processing is preferable. As a roll for a hot calender, a metal-metal roll, metal-paper roll, metal-rubber roll, or the like can be used.

The temperature condition of the heating and pressurization treatment is preferably a temperature equal to or higher than the glass transition temperature of the undrawn polyarylene sulfide fibers and equal to or lower than the melting point of the polyarylene sulfide fibers. For that purpose, the heating temperature is preferably 150 to 240°C. By setting the heating temperature preferably to 150°C or more, the undrawn polyarylene sulfide fibers are melted and softened, fused parts of polyarylene sulfide can be formed, and a wet-laid nonwoven fabric having excellent mechanical properties is obtained. By setting the heating temperature preferably to 240°C or less, the polyarylene sulfide fibers can be prevented from being completely fused, and impairing the shape of the fibers.

In a case where calendering is adopted as the heating and pressurization treatment, the pressure is preferably 98 to 7000 N/cm. By setting the pressure to 98 N/cm or more, fused parts of polyarylene sulfide can be formed, and a wet-laid nonwoven fabric having excellent mechanical properties is obtained. On the other hand, by setting the pressure to 7000 N/cm or less, tearing of the wet-laid nonwoven fabric in the heating and pressurization treatment process can be prevented, and the treatment can be performed stably. The process speed is preferably 1 to 30 m/minute. By setting the speed preferably to 1 m/minute or more and more preferably 2 m/minute, good work efficiency can be obtained. On the other hand, by setting the speed preferably to 30 m/minute or less and more preferably 20 m/minute or less, heat can be conducted to the fibers inside the wet-laid nonwoven fabric, and the binder fibers can be thermally fused.

## Examples

Hereinafter, a wet-laid nonwoven fabric of the present invention is described more specifically with reference to Examples. However, the present invention is not limited only to these Examples. Various modifications and corrections are possible without departing from the technical scope of the present invention. The characteristic values in Examples were determined by the following methods.

[Measurement and evaluation methods]

(1) Average fiber diameter

Using a scanning electron microscope "S-5500" manufactured by Hitachi High-Technologies Corporation as a scanning electron microscope and "WinROOF2015" manufactured by Mitani Corporation as image analysis software, measurement was performed as follows.

Procedure 1: An image of the cross section of the fiber is taken using the scanning electron microscope. The observation magnification is as follows: in a case where the fiber diameter of the fiber is 5 μm or more and 14 μm or less, the observation magnification is 1000 times; in a case where the fiber diameter is 1 μm or more and less than 5 μm, the observation magnification is 3000 times; and in a case where the fiber diameter is less than 1 μm, the observation magnification is 5000 times.

Procedure 2: Using the image taken, and using the image analysis software, the area Af ($\mu m^2$) formed by the cross-sectional contour of the single fiber is measured, and the diameter of a perfect circle having the same area as this area Af is calculated.

Procedure 3: This measurement is performed for 100 arbitrarily extracted fibers, a simple number average is determined to calculate the average fiber diameter (μm), and the average value is rounded off to the first decimal place.

(2) Average fiber length

Measurements were performed in accordance with "8.4.1. Average fiber length, Direct method (Method C)" of JIS L1015:2010 "Test methods for man-made staple fibers". The average value of 200 fibers was calculated, and the value was rounded off to the first decimal place.

(3) Basis weight

Based on JIS L1913:2010 "Test methods for general nonwoven fabrics", in accordance with mass per unit area, three sample pieces of 10 cm × 10 cm were collected, the mass (g) of each piece in a standard state was weighed, and the average value thereof was expressed as mass per 1 $m^2$ ($g/m^2$).

(4) Thickness

In accordance with "9.3.1 Measurement of thickness" of JIS P8118:2014 "Paper and board - Determination of thickness, density and specific volume", 20 sample pieces of 10 cm × 10 cm were collected, the thicknesses of the 20 test pieces were measured one by one using a micrometer (manufactured by Mitutoyo Corporation), and the arithmetic mean value thereof was taken as the thickness (μm).

(5) Tensile strength

Tensile strength was measured in accordance with "6.3.1 Standard condition" of "6.3 Tensile strength and elongation percentage (ISO method)" of JIS L1913:2010 "Test methods for man-made staple fibers". Using Tensilon ("UTM-III-100" manufactured by Orientec Co., Ltd.), the maximum point load was measured under conditions of a sample width of 15 mm, an initial length of 20 mm, and a tensile rate of 20 mm/minute. Measurement was performed five times per level, and the arithmetic mean value was determined and taken as the tensile strength (N/15 mm).

(6) Average pore diameter

Using an automated pore measurement system Perm-Porometer (manufactured by PMI) for porous materials, the pore size was calculated in accordance with the bubble point method (based on ASTM F-316-86). The measurement sample diameter was 25 mm. The mean flow pore diameter obtained by automatic calculation through pore diameter distribution measurement using Galwick (surface tension: 16 mN/m) as a measurement liquid having known surface tension was taken as the average pore diameter. The value obtained by rounding off the second decimal place to the first decimal place was used.

(7) Pore diameter distribution

Using the automated pore measurement system Perm-Porometer (manufactured by PMI) for porous materials, a wet-laid nonwoven fabric sheet was immersed in a liquid having a known surface tension value, and gas was supplied from

above the sheet while being increased in pressure. From the relationship between this pressure and the liquid surface tension on the surface of the wet-laid nonwoven fabric sheet, measurement was performed in the order of Dry-up and Wet-up to obtain a pore diameter distribution curve. In the pore diameter distribution curve obtained, among all pores detected in the range of from 0 kPa to 3000 kPa, the ratio of pores having a pore diameter of 0.9 Dp to 1.1 Dp was calculated and determined, wherein Dp (nm) was the pore diameter showing the maximum peak of the pore diameter distribution.

(8) Air permeability

In accordance with "6.8.1 Frazier type method" of "6.8 Air permeability (JIS method)" of JIS L1913:2010 "Test methods for man-made staple fibers", three sample pieces of 15 cm × 15 cm were collected. Using an air permeability tester ("FX3300" manufactured by TEXTEST AG), the air permeability volumes of the three test pieces were measured at a test pressure of 125 Pa, and the arithmetic mean value thereof was taken as the air permeability ($cm^3/(cm^2 \cdot s)$).

(9) Shrinkage rate

A wet-laid nonwoven fabric of 15 cm × 15 cm in a free state was held in a dryer at a temperature of 160°C for 24 hours. The shrinkage rate (%) was determined by the following formula from the change in dimensions before and after the heat treatment.

Shrinkage rate = (1 - area of wet-laid nonwoven fabric after heat treatment / area of wet-laid nonwoven fabric before heat treatment) × 100

(10) Orientation parameter

Measurements were performed using a laser Raman spectrometer (manufactured by Photon Design Co., Ltd.), as follows. First, a spectrum was obtained through a polarizer arranged in a polarization direction parallel to the polarization direction of the laser light. Next, the sample was rotated, and spectra were obtained in a polarization direction parallel to and a polarization direction perpendicular to the polarization direction of the laser light. Then, the orientation parameter was calculated in accordance with the following formula.

$$\text{(Orientation parameter)} = (I_{1080}/I_{740})\ \text{(parallel)} / (I_{1080}/I_{740})\ \text{(perpendicular)}$$

$I_{1080}/I_{740}$ (parallel): A value obtained by dividing a Raman band at or near 1080 $cm^{-1}$ by a Raman band intensity at or near 740 $cm^{-1}$ in a Raman spectrum measured in a polarization direction parallel to the fiber axis direction.
$I_{1080}/I_{740}$ (perpendicular): A value obtained by dividing a Raman band at or near 1080 $cm^{-1}$ by a Raman band intensity at or near 740 $cm^{-1}$ in a Raman spectrum measured in a polarization direction perpendicular to the fiber axis direction.

[Production Example 1]

<Production of drawn polyarylene sulfide fiber>

Polyphenylene sulfide composed only of p-phenylene sulfide units was used as an island component, and polyethylene terephthalate copolymerized with 5.0 mol% 5-sodium sulfoisophthalic acid was used as a sea component. Using a sea-island composite spinneret (number of islands: 1000) in which the shape for the island component was round, a yarn melt-discharged at a composite ratio of sea/island components of 40/60 was cooled and solidified. Then, an oil agent was applied, and the yarn was wound up at a spinning speed of 1000 m/min to yield undrawn fibers having a sea-island composite cross section (single hole discharge amount: 2.6 g/min).
The obtained undrawn fibers were wound six times around a first roller and a second roller heated to 90°C and 100°C respectively, to undergo heat drawing. Furthermore, the fibers were wound six times around a third roller heated to 180°C, to undergo heat setting. The draw ratio was 3.85 times. After the third roller, the fibers were taken up by a non-heated roller at a peripheral speed of 400 m/minute to yield drawn polyphenylene sulfide fibers.
Then, the obtained drawn polyphenylene sulfide fibers were cut with a cutter to yield cut fibers. The orientation parameter of the obtained drawn polyphenylene sulfide fibers was measured and found to be 11.

[Production Example 2]

<Production of undrawn polyarylene sulfide fibers>

After obtaining the undrawn fibers by the method described in <Production of drawn polyarylene sulfide fibers>, the obtained undrawn fibers were cut with a cutter to yield cut fibers. The orientation parameter of the obtained undrawn polyphenylene sulfide fibers was measured and found to be 2.5.

[Example 1]

The drawn polyphenylene sulfide fibers and undrawn polyphenylene sulfide fibers having the average fiber diameters and aspect ratios described in Table 1 were subjected to elution treatment of the sea component with aqueous solutions of 3 mass% sodium hydroxide (bath ratio, 1/100) heated to 90°C and 65°C respectively, to yield fiber dispersions. Next, the obtained fiber dispersions were weighed so as to have the basis weight and mixing ratio described in Table 1. The fibers were dispersed in such a manner that the fiber concentration in the dispersion became 2.0 mass ppm. Thus, fiber dispersions for papermaking were yielded. To these fiber dispersions for papermaking, a dispersant ("Y-258" (nonionic surfactant) manufactured by Yoshimura Oil Chemical Co., Ltd.) was added in such a manner that the concentration of the dispersant became 0.020 mass%. Additionally, a thickener ("MEIPAM" (registered trademark) manufactured by Meisei Chemical Works, Ltd.) was added so as to be 0.00030 mass%. The resultant mixture was sufficiently stirred. Papermaking was performed using these fiber dispersions for papermaking and a square sheet machine (250 mm square) manufactured by Kumagai Riki Kogyo Co., Ltd. Drying was performed using a rotary dryer having a roller temperature set to 120°C, to yield a dry web. Subsequently, hot calendering was performed at an iron roll surface temperature of 220°C, a linear pressure of 490 N/cm, and a roll rotation speed of 3 m/minute to yield a wet-laid nonwoven fabric. The properties thereof were evaluated. The evaluation results are shown in Table 1.

[Examples 2 to 22 and Comparative Examples 1 to 8]

Wet-laid nonwoven fabrics were obtained in the same manner as in Example 1 except that the conditions were changed as described in Tables 1 to 3.

As can be seen from the Tables, the wet-laid nonwoven fabrics of Examples 1 to 22 were thin, but had high tensile strength and high air permeability, and had high uniformity of pore diameter. On the other hand, the wet-laid nonwoven fabrics of Comparative Examples 1 to 8 were low in any one of the characteristics of thickness, strength, air permeability, and uniformity of pore diameter.

[Table 1]

| | | | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Constituent fibers | Drawn polyarylene sulfide fibers | Polymer | - | PPS | PPS | PPS | PPS | PPS | PPS | PPS | PPS | PPS | PPS |
| | | Average fiber diameter | μm | 2.5 | 2.5 | 2.5 | 0.7 | 2.5 | 2.5 | 2.5 | 2.5 | 2.5 | 2.5 |
| | | Average fiber length | mm | 3.0 | 3.0 | 3.0 | 1.0 | 3.0 | 3.0 | 4.0 | 2.0 | 3.0 | 3.0 |
| | | Aspect ratio | - | 1200 | 1200 | 1200 | 1429 | 1200 | 1200 | 1600 | 800 | 1200 | 1200 |
| | | Mixing ratio | % | 40 | 40 | 40 | 40 | 40 | 40 | 40 | 40 | 40 | 40 |
| | Undrawn polyarylene sulfide fibers | Polymer | - | PPS | PPS | PPS | PPS | PPS | PPS | PPS | PPS | PPS | PPS |
| | | Average fiber diameter | μm | 1.3 | 1.3 | 1.3 | 1.3 | 3.0 | 5.0 | 1.3 | 1.3 | 1.3 | 1.3 |
| | | Average fiber length | mm | 1.0 | 1.0 | 1.0 | 1.0 | 2.5 | 4.0 | 1.0 | 1.0 | 2.0 | 0.6 |
| | | Aspect ratio | - | 769 | 769 | 769 | 769 | 833 | 800 | 769 | 769 | 1538 | 462 |
| | | Mixing ratio | % | 60 | 60 | 60 | 60 | 60 | 60 | 60 | 60 | 60 | 60 |
| Dispersion | Fiber concentration | | mass ppm | 2.0 | 2.0 | 2.0 | 2.0 | 2.0 | 2.0 | 2.0 | 2.0 | 2.0 | 2.0 |
| | Dispersant concentration | | mass% | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ |
| Wet-laid nonwoven fabric | Basis weight | | $g/m^2$ | 3.5 | 6.5 | 2.0 | 3.5 | 3.5 | 3.5 | 3.5 | 3.5 | 3.5 | 3.5 |
| | Thickness | | μm | 7.2 | 12.5 | 3.5 | 4.9 | 12.2 | 14.0 | 7.3 | 7.1 | 8.8 | 7.2 |
| | Tensile strength | | N/15mm | 1.10 | 1.80 | 0.54 | 1.20 | 0.78 | 0.59 | 0.71 | 1.01 | 0.69 | 0.97 |
| | Average pore diameter | | μm | 9.2 | 6.4 | 14.1 | 1.5 | 23.2 | 44.0 | 18.4 | 8.3 | 41.1 | 9.9 |
| | Pore diameter distribution (0.9 Dp to 1.1 Dp) | | % | 70 | 73 | 55 | 66 | 59 | 53 | 52 | 72 | 53 | 66 |
| | Air permeability | | $cm^3/(cm^2 \cdot s)$ | 32.0 | 4.3 | 95.0 | 4.7 | 74.0 | 113.0 | 43.0 | 30.0 | 84.0 | 29.0 |
| | Shrinkage rate | | % | 2.1 | 2.3 | 5.5 | 3.1 | 4.7 | 3.2 | 4.7 | 2.2 | 2.1 | 2.7 |

[Table 2]

| | | | Unit | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Constituent fibers | Drawn polyarylene sulfide fibers | Polymer | - | PPS | PPS | PPS | PPS | PPS | PPS | PPS | PPS | PPS | PPS |
| | | Average fiber diameter | μm | 2.5 | 2.5 | 2.5 | 2.5 | 2.5 | 2.5 | 2.5 | 2.5 | 1.7 | 1.7 |
| | | Average fiber length | mm | 1.0 | 3.0 | 3.0 | 3.0 | 3.0 | 3.0 | 3.0 | 3.0 | 2.0 | 2.0 |
| | | Aspect ratio | - | 400 | 1200 | 1200 | 1200 | 1200 | 1200 | 1200 | 1200 | 1176 | 1176 |
| | | Mixing ratio | % | 40 | 40 | 40 | 40 | 40 | 40 | 40 | 40 | 40 | 40 |
| | Undrawn polyarylene sulfide fibers | Polymer | - | PPS | PPS | PPS | PPS | PPS | PPS | PPS | PPS | PPS | PPS |
| | | Average fiber diameter | μm | 1.3 | 3.0 | 1.3 | 1.3 | 1.3 | 1.3 | 1.3 | 1.3 | 1.3 | 1.3 |
| | | Average fiber length | mm | 1.0 | 1.0 | 1.0 | 1.0 | 1.0 | 1.0 | 1.0 | 1.0 | 1.0 | 1.0 |
| | | Aspect ratio | - | 769 | 333 | 769 | 769 | 769 | 769 | 769 | 769 | 769 | 769 |
| | | Mixing ratio | % | 60 | 60 | 60 | 60 | 60 | 60 | 60 | 60 | 60 | 60 |
| Dispersion | Fiber concentration | | mass ppm | 2.0 | 2.0 | 20.0 | 2.0 | 2.0 | 2.0 | 500.0 | 2.0 | 2.0 | 2.0 |
| | Dispersant concentration | | mass% | $2.0\times10^{-2}$ | $2.0\times10^{-2}$ | $2.0\times10^{-2}$ | $5.0\times10^{-3}$ | 1.0 | 5.0 | $2.0\times10^{-2}$ | $5.0\times10^{-4}$ | $2.0\times10^{-2}$ | $2.0\times10^{-2}$ |
| Wet-laid nonwoven fabric | Basis weight | | $g/m^2$ | 3.5 | 3.5 | 3.5 | 3.5 | 3.5 | 3.5 | 3.5 | 3.5 | 3.5 | 6.5 |
| | Thickness | | μm | 7.4 | 12.5 | 7.6 | 7.2 | 7.4 | 7.8 | 10.4 | 8.3 | 6.2 | 10.5 |
| | Tensile strength | | N/15mm | 0.70 | 0.54 | 0.98 | 0.97 | 1.04 | 0.97 | 0.68 | 0.76 | 0.97 | 0.70 |
| | Average pore diameter | | μm | 7.8 | 21.5 | 14.0 | 13.1 | 9.8 | 10.2 | 26.5 | 24.5 | 5.5 | 2.1 |
| | Pore diameter distribution (0.9 Dp to 1.1 Dp) | | % | 56 | 58 | 57 | 60 | 64 | 58 | 53 | 55 | 65 | 66 |
| | Air permeability | | $cm^3/(cm^2\cdot s)$ | 34.0 | 67.0 | 45.0 | 43.0 | 32.0 | 34.0 | 65.0 | 74.0 | 24.0 | 12.0 |
| | Shrinkage rate | | % | 5.1 | 4.3 | 2.4 | 2.7 | 3.1 | 3.0 | 3.4 | 4.3 | 2.4 | 2.1 |

[Table 3]

| | | | Unit | Example 21 | Example 22 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|
| Constituent fibers | Drawn polyarylene sulfide fibers | Polymer | - | PPS | PPS | PPS | PPS | PPS | PPS | PPS | PPS | PPS | PPS |
| | | Average fiber diameter | μm | 2.5 | 1.7 | 9.0 | 2.5 | 0.2 | 2.5 | 2.5 | 2.5 | 2.5 | 2.5 |
| | | Average fiber length | mm | 3.0 | 2.0 | 7.5 | 3.0 | 0.5 | 3.0 | 3.0 | 3.0 | 6.0 | 3.0 |
| | | Aspect ratio | - | 1200 | 1176 | 833 | 1200 | 2500 | 1200 | 1200 | 1200 | 2400 | 1200 |
| | | Mixing ratio | % | 40 | 40 | 40 | 40 | 40 | 40 | 40 | 40 | 40 | 40 |
| | Undrawn polyarylene sulfide fibers | Polymer | - | PPS | PPS | PPS | PPS | PPS | PPS | PPS | PPS | PPS | PPS |
| | | Average fiber diameter | μm | 1.3 | 1.3 | 1.3 | 14 | 1.3 | 0.5 | 1.3 | 1.3 | 1.3 | 3.0 |
| | | Average fiber length | mm | 1.0 | 1.0 | 1.0 | 6.0 | 1.0 | 0.5 | 1.0 | 1.0 | 1.0 | 8.0 |
| | | Aspect ratio | - | 769 | 769 | 769 | 429 | 769 | 1000 | 769 | 769 | 769 | 2667 |
| | | Mixing ratio | % | 60 | 60 | 60 | 60 | 60 | 60 | 60 | 60 | 60 | 60 |
| Dispersion | Fiber concentration | | mass ppm | 2.0 | 2.0 | 2.0 | 2.0 | 2.0 | 2.0 | 2.0 | 2.0 | 2.0 | 2.0 |
| | Dispersant concentration | | mass% | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ | $2.0 \times 10^{-2}$ |
| Wet-laid nonwoven fabric | Basis weight | | $g/m^2$ | 2.5 | 2.5 | 3.5 | 3.5 | 3.5 | 3.5 | 10.0 | 0.8 | 3.5 | 3.5 |
| | Thickness | | μm | 3.5 | 3.3 | 18.5 | 22.3 | 3.5 | 6.4 | 17.5 | 3.3 | 9.1 | 13.2 |
| | Tensile strength | | N/15mm | 0.54 | 0.58 | 0.37 | 0.15 | 0.62 | 0.88 | 1.90 | 0.22 | 0.37 | 0.34 |
| | Average pore diameter | | μm | 20.4 | 15.4 | 68.1 | 134.0 | 0.4 | 0.3 | 4.8 | 47.1 | 84.2 | 89.0 |
| | Pore diameter distribution (0.9 Dp to 1.1 Dp) | | % | 61 | 60 | 44 | 33 | 56 | 66 | 62 | 20 | 23 | 28 |
| | Air permeability | | $cm^3/(cm^2 \cdot s)$ | 95.0 | 48.0 | 190.0 | 434.0 | 0.8 | 0.3 | 2.4 | 489.0 | 233.0 | 201.0 |
| | Shrinkage rate | | % | 3.0 | 3.1 | 3.5 | 2.5 | 2.2 | 2.1 | 5.1 | 7.4 | 5.1 | 5.1 |

## Claims

1. A wet-laid nonwoven fabric which comprises drawn polyarylene sulfide fibers having an average fiber diameter of 0.3 μm or more and 3.0 μm or less, has an average pore diameter of 0.5 μm or more and 50.0 μm or less, and has a basis weight of 1.0 $g/m^2$ or more and less than 8.0 $g/m^2$.

2. The wet-laid nonwoven fabric according to claim 1, comprising undrawn polyarylene sulfide fibers having an average fiber diameter of 0.8 μm or more and 6.0 μm or less.

3. The wet-laid nonwoven fabric according to claim 1 or 2, wherein aspect ratio (average fiber length / average fiber diameter) of the drawn polyarylene sulfide fibers is 800 or more and 2000 or less, and
aspect ratio (average fiber length / average fiber diameter) of the undrawn polyarylene sulfide fibers is 400 or more and 1800 or less.

4. The wet-laid nonwoven fabric according to claim 1 or 2, wherein, in a pore diameter distribution curve, pores having a diameter of 0.9 Dp or more and 1.1 Dp or less account for 50% or more of all pores, wherein Dp (nm) is a pore diameter indicating the maximum peak in a pore diameter distribution.

5. The wet-laid nonwoven fabric according to claim 1 or 2, having a shrinkage rate of 8.0% or less after being left to stand in an atmosphere at a temperature of 160°C for 24 hours.

6. The wet-laid nonwoven fabric according to claim 2, wherein the average fiber diameter of the undrawn polyarylene sulfide fibers is smaller than the average fiber diameter of the drawn polyarylene sulfide fibers.

7. A reinforced electrolyte membrane comprising the wet-laid nonwoven fabric according to claim 1 or 2.

8. A method of producing the wet-laid nonwoven fabric according to claim 2, comprising a step of dispersing the drawn polyarylene sulfide fibers and the undrawn polyarylene sulfide fibers in an aqueous medium to obtain a dispersion, wherein fiber concentration of the dispersion is 1.0 mass ppm or more and 80.0 mass ppm or less.

9. The method of producing the wet-laid nonwoven fabric according to claim 8, wherein the dispersion contains a dispersant, and concentration of the dispersant in the dispersion is 0.0010 mass% or more and 8.0 mass% or less.

## INTERNATIONAL SEARCH REPORT

International application No.
**PCT/JP2024/031805**

**A. CLASSIFICATION OF SUBJECT MATTER**

***D21H 17/58***(2006.01)i; ***H01M 8/10***(2016.01)i; ***H01M 8/106***(2016.01)i; ***H01M 8/1062***(2016.01)i
FI: D21H17/58; H01M8/106; H01M8/1062; H01M8/10 101

According to International Patent Classification (IPC) or to both national classification and IPC

**B. FIELDS SEARCHED**

Minimum documentation searched (classification system followed by classification symbols)

D21H17/58; H01M8/10; H01M8/106; H01M8/1062

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/159216 A1 (TEIJIN LIMITED) 21 September 2017 (2017-09-21) paragraph [0012], table 1 | 1-5 |
| Y | | 7-9 |
| A | | 6 |
| Y | JP 2020-076174 A (MITSUBISHI PAPER MILLS LTD.) 21 May 2020 (2020-05-21) paragraphs [0002], [0023]-[0024] | 7-9 |
| A | JP 2011-106043 A (TOMOEGAWA PAPER CO., LTD.) 02 June 2011 (2011-06-02) paragraph [0021] | 6 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 September 2024** | **08 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/031805**

| Patent document cited in search report | Publication date (day/month/year) | Patent family member(s) | Publication date (day/month/year) |
|---|---|---|---|
| WO 2017/159216 A1 | 21 September 2017 | US 2019/0070540 A1<br>paragraph [0014], table 1<br>EP 3431162 A1<br>KR 10-2018-0121613 A<br>CN 109069965 A | |
| JP 2020-076174 A | 21 May 2020 | (Family: none) | |
| JP 2011-106043 A | 02 June 2011 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003077494 A
- JP 2016089197 A
- JP 2020076174 A